# EUROPÄISCHE PATENTSCHRIFT

(11) **EP 2 047 340 B1**
(45) Veröffentlichungstag und Bekanntmachung des Hinweises auf die Patenterteilung: **30.11.2011**
(21) Anmeldenummer: 07722120.8
(22) Anmeldetag: 29.03.2007
(51) Int. Cl.: G05B 19/042

(54) **VENTILBATTERIE MIT EINEM REGLERMODUL**
VALVE BANK WITH CONTROLLER MODULE
BATTERIE DE VALVES AVEC MODULE DE RÉGULATION

(43) Veröffentlichungstag der Anmeldung: 15.04.2009
(73) Patentinhaber: FESTO AG & Co. KG, 73734 Esslingen (DE)
(72) Erfinder: ARBTER, Jürgen, 71332 Waiblingen (DE); KINTZEL, Thomas, 73730 Esslingen (DE); NÖLLE, Gerhard, 73207 Plochingen (DE); RAUTENBACH, Klaus, 73730 Esslingen (DE)
(74) Vertreter: Bregenzer, Michael
(86) Internationale Anmeldenummer: PCT/DE2007/000562
(87) Internationale Veröffentlichungsnummer: WO 2008/119306

(56) Entgegenhaltungen:
- EP-A- 1 584 945
- EP-A1- 1 586 780
- WO-A-01/33087
- WO-A-94/04831
- DE-A1- 4 111 890
- US-A- 5 884 664

## Beschreibung

Die Erfindung betrifft eine Ventilbatterie gemäß dem Oberbegriff des Anspruchs 1.

Eine solche Ventilbatterie geht aus EP 1 586 780 A1 hervor. Die Ventilbatterie weist eine Steuermodulanordnung und.eine Druckluft-Wartungseinheit hervor, die an eine Ventilbatterie angereiht sind. Über ein Ein-/Augsgabemodul können Aktoren, beispielsweise ein pneumatisches Ventil, ein pneumatischer Regler oder dergleichen, angeschlossen werden. Das Steuermodul enthält beispielsweise ein SPS-Modul.

Ein Reglermodul gemäß DE 198 28 024 B4 regelt zentral mehrere pneumatische Antriebe über einen Feldbus, an den die Antriebe angeschlossen sind. Sämtliche Antriebsachsen werden durch ein einziges Reglermodul gesteuert. Die jeweilige Rechenkapazität oder Reglerkapazität des Reglermoduls begrenzt die Anzahl von Antrieben, die an das Reglermodul anschließbar sind.

Zur Anbindung eines solchen Reglermoduls an eine Peripherie sind weitere Schnittstellen erforderlich, beispielsweise für eine übergeordnete Steuerung oder ein Programmierwerkzeug. Bei der Konfiguration und Parametrierung des Reglermoduls müssen zahlreiche Einzelwerte für die einzelnen Antriebsachsen eingestellt werden, was zeitaufwendig und auch fehleranfällig sein kann.

WO 01/33087 A2 beschreibt eine Regleranordnung für ein hydraulisches oder pneumatisches System. Ein Reglerventil kann von einer übergeordneten Steuereinheit, beispielsweise einer SPS über einen Feldbus angesteuert werden.

US 5,884,664 betrifft eine Druckluftvorrichtung, bei der eine Steuereinheit auf eine Ventilbatterie aufgesattelt ist.

Aus WO 94/04831 geht eine elektro-pneumatische Steuereinrichtung hervor, die an einem Fluidverteiler angeordnet ist und eine Mehrzahl von Ventilen steuert.

Es ist daher die Aufgabe der vorliegenden Erfindung, eine Ventilbatterie mit einem flexibel einsetzbaren Reglerkonzept vorzuschlagen.

Zur Lösung der Aufgabe ist eine Ventilbatterie gemäß der technischen Lehre des Anspruchs 1 vorgesehen.

Eine erfindungsgemäße Ventilbatterie ist mit mehreren in einer Reihenrichtung nebeneinander angeordneten Ventilmodulen zur fluidtechnischen Ansteuerung fluidtechnischer Aktoren, mit einer Ventilbatterie-Kommunikationseinrichtung zu einer externen Kommunikation der Ventilbatterie, und mit einem internen Kommunikationsbus zur internen Kommunikation der Ventilbatterie-Kommunikationseinrichtung und der Ventilmodule ausgestattet und weist mindestens ein an die Ventilbatterie-Kommunikationseinrichtung angereihtes erfindungsgemäßes Reglermodul zur Regelung eines Aktors auf. Das mindestens eine Reglermodul enthält eine Internbus-Schnittstelle für den internen Kommunikationsbus zur Kommunikation mit der ventilbatterie-Kommunikationseinrichtung, so dass das mindestens eine Reglermodul zu einer externen Kommunikation mit der Ventilbatterie-Kommunikationseinrichtung verbunden ist.

Über die Regler-Kommunikationsschnittstelle ist ein Regelkreis schließbar. Der Erfindung liegt ein modulares, granulares Konzept zu Grunde, bei dem eines oder mehrere Reglermodule an die Ventilbatterie angereiht werden können, so dass die Ventilbatterie an die erforderlichen Regelungsaufgaben individuell anpassbar ist.

Ferner nutzt das Reglermodul vorteilhaft die vorhandene Versorgungsinfrastruktur und Kommunikationsinfrastruktur der Ventilbatterie. Beispielsweise ist das Reglermodul über den internen Bus der Ventilbatterie mit der Ventilbatterie-Kommunikationseinrichtung verbunden, um über diese mit externen Komponenten, beispielsweise einer übergeordneten Steuerung, einem Parametriergerät, einem Diagnosegerät oder dergleichen, zu kommunizieren. Die Ventilbatterie-Kommunikationseinrichtung weist beispielsweise eine Feldbus-Schnittstelle, eine USB-Schnittstelle (USB = Universal Serial Bus) oder dergleichen auf. Ferner kann die Ventilbatterie-Kommunikationseinrichtung zu einer drahtlosen Kommunikation ausgestaltet sein. Die Ventilbatterie-Kommunikationseinrichtung ist beispielsweise fest an einen Fluidverteiler der Ventilbatterie angebaut. Bei der Ventilbatterie-Kommunikationseinrichtung ist aber auch ein modulares Konzept vorteilhaft, bei dem sie als ein Schnittstellenmodul ausgestaltet ist. Somit können auch mehrere Kommunikationseinrichtungen oder Schnittstellenmodule an die Ventilbatterie in Abhängigkeit von den Kommunikationsaufgaben mit externen Komponenten (überlagerte Steuerung, Programmiergerät) angereiht werden.

Ferner ist es möglich, dass die Ventilbatterie eine lokale Steuerungseinrichtung enthält, z.B. in der Art einer speicherprogrammierbaren Steuerung. Die Steuerungseinrichtung kann einen Bestandteil der Kommunikationseinrichtung bilden.

Bei dem zu regelnden Aktor handelt es sich beispielsweise um einen fluidtechnischen Aktor, z.B. einen pneumatischen oder hydraulischen Aktor. Die Ventilbatterie ist dann beispielsweise eine pneumatische oder hydraulische Ventilbatterie. Ferner ist es möglich, dass der Aktor ein elektrischer Aktor ist oder auch ein fluidtechnischer-elektrischer Hybridantrieb, das heißt z.B. ein Antrieb mit einem pneumatisch und elektrisch angetriebenen Kolben bzw. Läufer.

Die Reglermodule können vorteilhaft über den internen Bus miteinander kommunizieren, beispielsweise um Regelungsaufgaben zu koordinieren.

Das mindestens eine Reglermodul einer erfindungsgemäßen Ventilbatterie ist vorteilhaft über die Ventilbatterie-Kommunikations-einrichtung steuerbar und/oder parametrierbar. Ferner kann das Reglermodul Diagnosedaten, beispielsweise Verschleißzustände, Anzahlen von Arbeitszyklen oder dergleichen, über die Ventilbatterie-Kommunikationseinrichtung ausgeben. Es ist möglich, mehrere Reglermodule über ein und dieselbe Ventilbatterie-Kommunikationseinrichtung zu parametrieren, die Reglermodule zu steuern und von diesen Diagnosedaten zu erhalten. Die Verwaltung der jeweiligen Reglermodule ist vereinfacht, weil sie über eine gemeinsame Schnittstelle, nämlich die Ventilbatterie-Kommunikationseinrichtung parametriert gesteuert werden können. Dennoch ist es möglich, modular weitere Reglermodule an die Ventilbatterie anzureihen und in ein Parametrier- oder Konfigurationsprojekt aufzunehmen.

Zwar wäre es prinzipiell möglich, dass das Reglermodul Regelungswerte über den internen Bus kommuniziert, beispielsweise Stellwerte ausgibt und/oder Istwerte empfängt. Die Regler-Kommunikationsschnittstelle realisiert jedoch eine schnelle Stellwert-Ausgabe und korrespondierenden einen schnellen Istwert-Empfang, indem die Regler-Kommunikationsschnittstelle eine von der Internbus-Schnittstelle separate Schnittstelle ist. Somit steht dediziert für die Regelungsaufgaben eine separate Regler-Kommunikationsschnittstelle zur Verfügung. Diese ist vorteilhaft eine digitale Schnittstelle, die gegenüber einer analogen Schnittstelle auch über längere Übertragungsstrecken eine unverfälschte Signalübertragung ermöglicht. Beispielsweise handelt es sich bei der Schnittstelle um eine sogenannte SSi-Schnittstelle.

Die Regler-Kommunikationsschnittstelle ist vorteilhaft eine Echtzeit-Schnittstelle.

Zur modularen Erweiterung, insbesondere zur seriellen Verkettung von an die Regler-Kommunikationsschnittstelle anreihbaren zu regelnden Komponenten ist es vorteilhaft, wenn die Regler-Kommunikationsschnittstelle eine Bus-Schnittstelle ist, beispielsweise eine Feldbus-Schnittstelle. Die Bus-Schnittstelle ist vorteilhaft eine Echtzeit-Bus-Schnittstelle.

Die Regler-Kommunikationsschnittstelle und/oder die Internbus-Schnittstelle können leitungsgebunden oder auch drahtlos sein, beispielsweise über Funk oder mit Licht kommunizieren.

Der von dem Reglermodul geregelte Aktor ist zweckmäßigerweise ein fluidtechnischer Aktor, den das Reglermodul über eine Ventileinrichtung ansteuert. Mithin regelt also das Reglermodul den Aktor indirekt über die ventileinrichtung. Der Aktor kann auch elektrische Antriebskomponenten haben, beispielsweise ein Erregermagnetfeld zum Antrieben eines Kolbens.

Zwar wäre es prinzipiell möglich, dass die Ventileinrichtung durch ein Ventilmodul der Ventilbatterie gebildet ist. Zur Realisierung der schnellen Regler-Kommunikationsschnittstelle ist es dann vorteilhaft, wenn das Reglermodul über dedizierte Verkettungskontakte, separat vom internen Kommunikationsbus mit dem Ventilmodul kommuniziert, das den zu regelnden Aktor ansteuert. Vorteilhaft kann die Ventileinrichtung aber auch eine von der Ventilbatterie separate Einrichtung sein, beispielsweise ein sogenanntes Servoventil. Die von der Ventilbatterie abgesetzte Ventileinrichtung kann eine vom anzusteuernden Aktor separate Baueinheit oder ein Bestandteil des Aktors sein. Das Ventil ist dann in den Aktor integriert.

Die Ventileinrichtung und der Aktor und/oder eine Sensoranordnung sind zweckmäßigerweise seriell an die Regler-Kommunikationsschnittstelle angekoppelt. Dann ist nur eine einzige Leitungsverbindung für die Regelungsaufgaben erforderlich. Man erhält eine kaskadierte Anordnung. Beispielsweise ist die serielle Verbindung eine Bus-Verbindung. Möglich wären z.B. durchgeschleifte Kontakte an der Ventileinrichtung. Die Sensoranordnung ist beispielsweise am Aktor angeordnet oder dem Aktor zugeordnet und ermittelt Istwerte des Aktors, beispielsweise Druckwerte, Positionswerte oder dergleichen. Auch auf Seiten der Ventileinrichtung können Sensoren vorteilhaft vorgesehen sein, beispielsweise Drucksensoren.

In diesem Zusammenhang sei betont, dass für die Ausgabe von Stellwerten und für die Eingabe von Istwerten, z.B. Sensordaten, jeweils separate Aus- und Eingangschnittstellen vorgesehen sein können oder dass das Reglermodul für Zusatz-Sensordaten, beispielsweise Überhitzungszustände signalisierende Temperaturdaten, zusätzlich zu der Regler-Kommunikationsschnittstelle eine Sensordaten Eingangschnittstelle aufweisen kann.

Das Reglermodul enthält zweckmäßigerweise eine Empfangseinrichtung zum Empfang von Geräte-Identifikationsdaten des zu regelnden Aktors, und/oder einer Sensoranordnung, die dem Aktor zugeordnet ist und/oder einer den Aktor ansteuernden Ansteuereinrichtung, beispielsweise der vorgenannten Ventileinrichtung. Die Empfangseinrichtung kann eine von der Regler-Kommunikationsschnittstelle separate Schnittstelle sein. Vorteilhaft ist sie jedoch in die Regler-Kommunikationsschnittstelle integriert.

Bei den Geräte-Identifikationsdaten handelt es sich beispielsweise um einen Typ des Gerätes, um eine Seriennummer des Gerätes, um physikalische Größen, z.B. Länge, Wirkfläche eines Aktorglieds oder Kolbens, Druckwert, insbesondere Maximaldrücke und Nenn-Betriebsdrücke, Kraftabgabewerte, Kraftabgabewerte im Verhältnis zu eingestellten Drücken, ein Arbeitshub oder dergleichen. Auch kinematische Daten des fluidtechnischen Gerätes, z.B. Geschwindigkeitswerte, z.B. eine Maximalgeschwindigkeit oder eine Nenn-Betriebsgeschwindigkeit, Bremsweg oder dergleichen können Geräte-Identifikationsdaten darstellen.

Die Empfangseinrichtung gibt die Geräte-Identifikationsdaten beispielsweise über die Internbus-Schnittstelle aus, so dass sie beispielsweise über die Ventilbatterie-Kommunikationseinrichtung an eine übergeordnete Steuerungseinrichtung oder an eine lokale, in der Ventilbatterie enthaltene Steuerungseinrichtung gesendet werden.

Wie schon eingangs erläutert, ist es vorteilhaft, wenn ein erfindungsgemäßes Regelungsmodul ein granulares Konzept realisiert. Insbesondere ist es zweckmäßig, wenn es zur Regelung eines einzigen Aktors ausgestaltet ist, so dass die Bedienung des Regelungsmoduls vereinfacht ist. Der Aktor ist beispielsweise ein Antrieb für eine Antriebsachse. Das Regelungsmodul, das nur diesem einzigen Aktor zugeordnet ist, ist einfach parametrierbar.

Vorteilhaft kann es aber auch sein, wenn das Regelungsmodul zur Regelung von wenigen, beispielsweise zwei, Aktoren ausgestaltet ist. Diese können unabhängig betreibbar sein oder, in einer vorteilhaften Ausgestaltung der Erfindung, miteinander verkettet sein. Beispielsweise sind die beiden Aktoren X- und Y-Achsenantriebe eines Portals oder eines Schlittens einer Werkzeugmaschine.

Bei dem Regelungsmodul sind verschiedenartige Regelungsaufgaben möglich, so z.B. eine Lageregelung, eine Kraftregelung, eine Druckregelung oder dergleichen. Vorteilhaft ist bei fluidtechnischen oder fluidtechnisch/elektrischen Aktoren, insbesondere bei mit Druckluft betriebenen Aktoren, wenn die Lageregelung eine unterlagerte Druck- oder Kraftregelung aufweist. Die Lageregelung sorgt für die Positionierung des Aktorglieds an einer vorbestimmten Position. Wenn die Position erreicht ist, ist die Druckregelung vorteilhaft. Sie stellt beispielsweise einen Differenzdruck zwischen einer antriebsseitigen und einer abtriebsseitigen Kolbenkammer auf Null ein, so dass Aktorglied an der erreichten Position stehen bleibt und nicht etwa wegschleicht.

Zweckmäßigerweise ist das Reglermodul zwischen diversen Reglerarten umschaltbar, wozu beispielsweise ein lokaler Schalter oder eine Parametrierung über die Ventilbatterie-Kommunikationseinrichtung zweckmäßig sind.

Wie schon erwähnt, nutzt das erfindungsgemäße Reglermodul eine vorhandene Versorgungsinfrastruktur der Ventilbatterie. So enthalten die Verkettungskontakte beispielsweise Anschlusskontakte zum Anschluss an eine erste Versorgungsspannung der Ventilbatterie. Das Reglermodul versorgt den zu regelnden Aktor oder eine diesem vorgeschaltete Ansteuereinrichtung oder eine Sensoranordnung mit dieser ersten Versorgungsspannung. Die Versorgungsspannung liegt beispielsweise gegenüber einem Massepotential an einer Sammelschiene der Ventilbatterie an.

Die Verkettungskontakte sind zweckmäßigerweise an entgegengesetzten Seitenwandungen des Reglermoduls angeordnet. Zwischen den jeweiligen Verkettungskontakten der entgegengesetzten Seiten sind vorteilhaft Verbindungen vorhanden, so dass die Verkettungskontakte sozusagen durch das Reglermodul durchgeschleift sind. Somit können weitere Reglermodule oder sonstige Komponenten an das Reglermodul angereiht werden.

Die Verkettungskontakte können erste und zweite Versorgungskontakte zum Anschluss an eine erste und zweite Versorgungsspannung der Ventilbatterie umfassen, wobei die erste und zweite Versorgungsspannung gleich oder voneinander verschieden sein können. Beispielsweise beträgt die erste Versorgungsspannung 5 Volt, die zweite Versorgungsspannung 10 Volt. Das Reglermodul versorgt zweckmäßigerweise den Aktor oder eine diesen ansteuernde Ansteuereinrichtung, z.B. das vorgenannte abgesetzte Reglermodul, eine Sensoranordnung, oder dergleichen mit der ersten und zweiten Versorgungsspannung. Das Reglermodul stellt die Versorgungsspannung beispielsweise an der Regler-Kommunikationsschnittstelle oder an separaten Versorgungskontakten zur Verfügung. Die Ventilbatterie hat also beispielsweise zwei oder mehr Versorgungs-Sammelschienen, an die ein Reglermodul ankoppelbar ist. Durch Zu- und Abschalten einer Sammelschiene ist es möglich, beispielsweise Maschinenbereiche selektiv zu- und abzuschalten. Es ist möglich, dass unterschiedliche Reglermodule auf unterschiedliche Versorgungssammelschienen der Ventilbatterie zugreifen. Ferner kann ein Reglermodul auf mehrere Versorgungsspannungen zugreifen und beispielsweise eine erste Versorgungsspannung einem ersten zu regelnden Aktor und eine zweite Versorgungsspannung einem zweiten zu regelnden Aktor bereitstellen. Die jeweils zu verwendende erste, zweite oder weitere Versorgungsspannung ist vorteilhaft mittels eines elektrischen Schalters des Reglermoduls wählbar. Aber auch eine Software-Lösung ist vorteilhaft, das heißt eine Parametrierung zur Auswahl der jeweiligen Versorgungsspannung.

Nachfolgend werden Ausführungsbeispiele der Erfindung anhand der Zeichnung erläutert. Es zeigen:

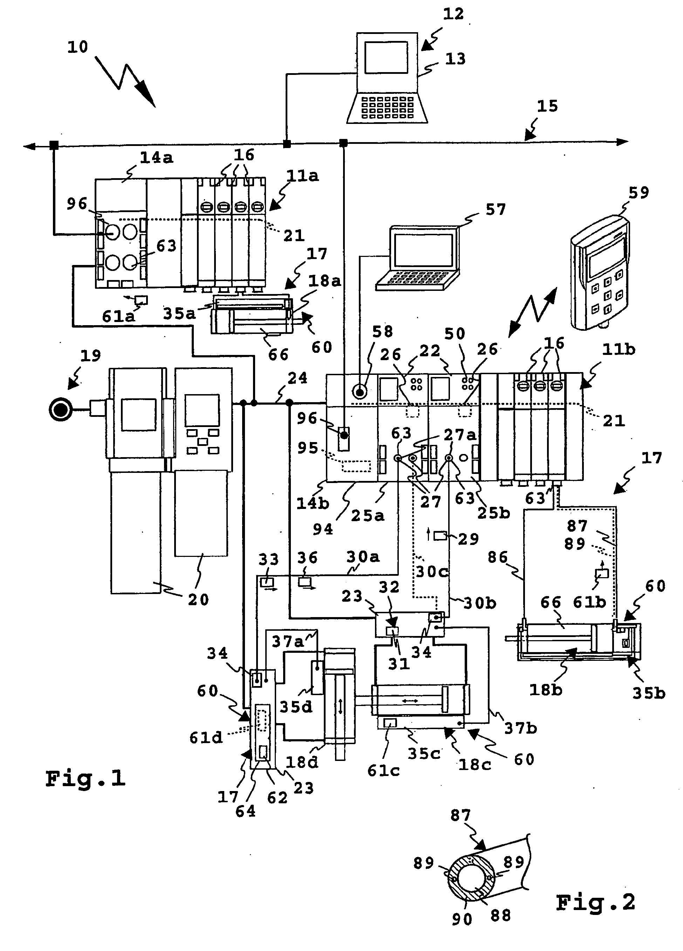

- Figur 1: schematisch ein Automatisierungssystem mit zwei Ventilbatterien und einer Leitzentrale,
- Figur 2: eine Fluidleitung mit integrierten elektrischen Leitern zur Anbindung eines Aktors an eine Ventilbatterie gemäß Figur 1,

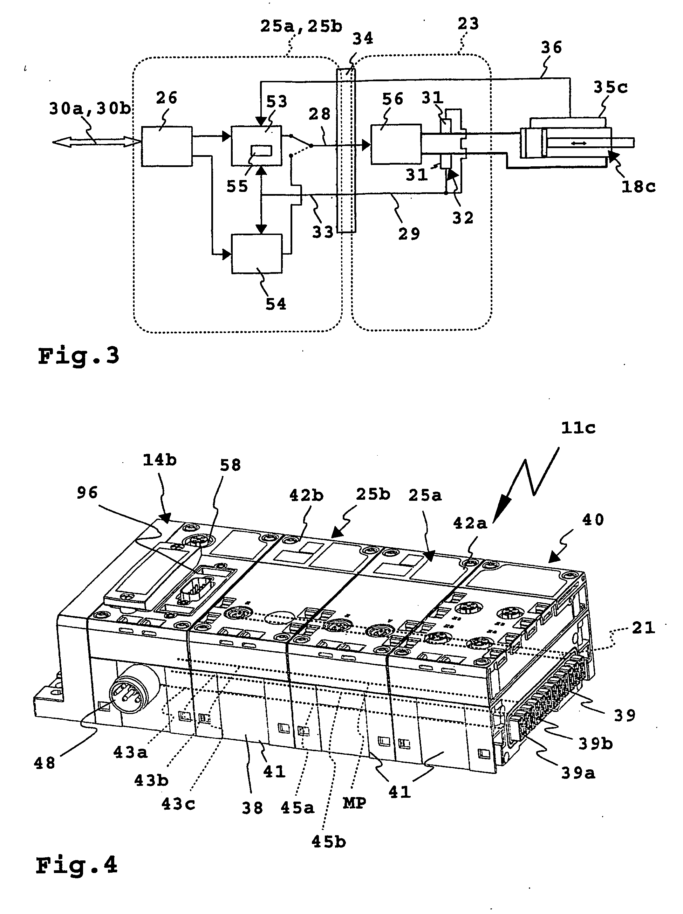

- Figur 3: eine schematische Darstellung eines Reglermoduls einer Ventilbatterie gemäß Figur 1,
- Figur 4: einen Kommunikations- und Reglerteil einer erfindungsgemäßen Ventilbatterie mit einer Ventilbatterie-Kommunikationseinrichtung, zwei Reglermodulen und einem Ein-Ausgabemodul,

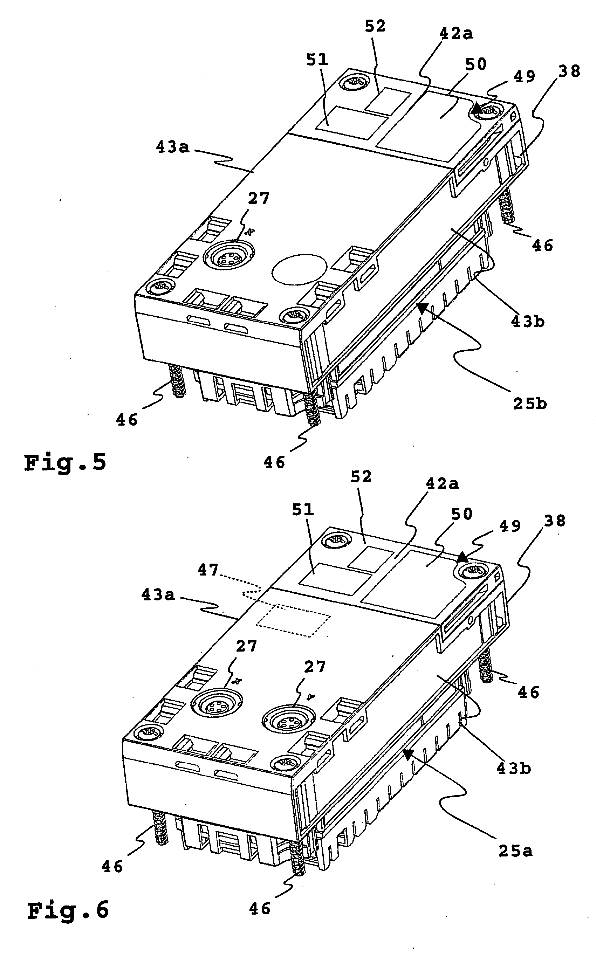

- Figur 5: ein Reglermodul der Ventilbatterie gemäß Figur 4 zur Regelung eines Aktors, und
- Figur 6: ein Reglermodul der Ventilbatterie gemäß Figur 4 zur Regelung von zwei Aktoren.

Die Ausführungsbeispiele der Erfindung zeigen teilweise ähnliche oder gleichwirkende Komponenten, die mit denselben Bezugszeichen versehen und nur je einmal beschrieben sind.

Bei einem Automatisierungssystem 10 werden Ventilbatterien 11a, 11b von einer übergeordneten, zentralen Steuerungseinrichtung 12, beispielsweise einem Leitrechner 13, gesteuert. Die Ventilbatterien 11a, 11b sind mit Ventilbatterie-Kommunikationseinrichtungen 14a, 14b zu einer externen Kommunikation an einen Systembus 15, beispielsweise einen Feldbus, über Extern-Schnittstellen 96 angeschlossen, z.B. Bus-Schnittstellen. Die Steuerungseinrichtung 12 steuert die Ventilbatterien 11a, 11b über den Systembus 15, der leitungsgebunden oder drahtlos sein kann.

Die Ventilbatterien 11a, 11b enthalten Ventilmodule 16, die an die Kommunikationseinrichtungen 14a, 14b angereiht sind. Die Ventilmodule 16 dienen zur fluidtechnischen Ansteuerung von fluidtechnischen Geräten 17, beispielsweise pneumatischen Aktoren 18a, 18b. Die Aktoren 18a, 18b sind pneumatische Arbeitszylinder 66, wobei beispielhaft solche mit Kolbenstangen dargestellt sind, aber auch kolbenstangenlose Varianten oder Bauarten mit einem zusätzlichen elektrischen Antriebsteil möglich sind. Die Reglermodule 25a, 25b sind auch zur Regelung elektrischer oder kombinierter fluidtechnischer-elektrischer Antriebe ausgestaltet. So könnte beispielsweise an Stelle des pneumatischen Aktors 18d ein elektrischer Antrieb vorgesehen sein.

Die Ventilbatterien 11a, 11b werden mit Druckluft betrieben, beispielsweise aus einer Druckluftquelle 19. Die Druckluftquelle 19 speist beispielsweise Wartungsgeräte 20, z.B. Filter und Öler, die Druckluft für die Ventilbatterien 11a, 11b aufbereiten. Die Wartungsgeräte 20 sind vorliegend von den Ventilbatterien 11a, 11b separate Einrichtungen, können aber beispielsweise auch Bestandteile der Ventilbatterie 11b bilden.

Die Ventilmodule 16 erhalten von der zentralen Steuerungseinrichtung 12 Steuerbefehle zur pneumatischen Ansteuerung der Aktoren 18a, 18b über den Systembus 15. Die Kommunikationseinrichtungen 14a, 14b übertragen die so erhaltenen Steuerbefehle über interne Kommunikationsbusse 21 an die Ventilmodule 16. Die Kommunikationsbusse 21 dienen zur internen Kommunikation der Ventilbatterien 11a, 11b.

Während die Ventilbatterie 11a ausschließlich extern über den Systembus 15 gesteuert wird, hat die Ventilbatterie 11b eine lokale Steuerungskompetenz in Gestalt von Steuerungseinrichtungen 22. Die Steuerungseinrichtungen 22 sind als Steuermodule ausgestaltet, die zwischen die Ventilmodule 16 sowie die als Kommunikationsmodul ausgestaltete Kommunikationseinrichtung 14b geschaltet sind.

Optional kann die Ventilbatterie 11b eine lokale Steuerungseinrichtung 94 zur ihrer Steuerung, z.B. der Ventilmodule 16, enthalten, z.B. ein separates Steuerungsmodul. Auch die Kommunikationseinrichtung 14b kann als eine lokale Steuerungseinrichtung 94 für die Ventilbatterie 11b ausgestaltet sein. Zu diesem Zweck enthält die Kommunikationseinrichtung 14b beispielsweise einen Prozessor 95, der über den Kommunikationsbus 21 Steuerbefehle beispielsweise an die Ventilmodule 16 sendet.

Die Steuerungseinrichtungen 22 steuern Ventileinrichtungen 23 an, die wiederum Aktoren 18c, 18d ansteuern. Die Aktoren 18c, 18d bilden z.B. Servoantriebe. Zwar könnten die Aktoren 18c, 18d voneinander unabhängige Antriebe sein. Die Aktoren 18c, 18d sind jedoch miteinander mechanisch gekoppelt. In der Zeichnung ist das schematisch dadurch veranschaulicht, dass der Aktor 18d am Kraftabgriff des Aktors 18c, beispielsweise seiner Kolbenstange, angeordnet ist. Eine mechanische Kopplung kann aber auch indirekt realisiert sein, beispielsweise wenn die Aktoren 18c und 18d Antriebe eines Portals oder eines in X- und Y-Richtung verfahrbaren Schlittens bilden.

Die Ventileinrichtungen 23 sind von der Ventilbatterie 11b separate Ventile, die an ein von der Druckluftquelle 19 mit Druckluft gespeistes Druckluftnetz 24 angeschlossen sind. Die Ventileinrichtungen 23 steuern die Druckluftzufuhr zu den Aktoren 18c, 18d, die beispielsweise pneumatische Arbeitszylinder sind. Die Ventileinrichtungen 23 und die Aktoren 18c, 18d sind ebenfalls fluidtechnische Geräte 17.

Die Steuerungseinrichtungen 22 regeln die Aktoren 18c, 18d durch eine Ansteuerung der Ventileinrichtungen 23 im Sinne einer Regelung. Die Steuerungseinrichtungen 22 sind beispielsweise Reglermodule 25a, 25b. Die Reglermodule 25a, 25b fügen sich in das modulare Konzept der Ventilbatterie 11b ein. Sie sind an die Ventilmodule 16 sowie an die Kommunikationseinrichtung 14b anreihbar. Die Reglermodule 25a, 25b sind mit Internbus-Schnittstellen 26 an den internen Kommunikationsbus 21 der Ventilbatterie 11b angekoppelt. Die Reglermodule 25a, 25b können über den Kommunikationsbus 21 Nachrichten empfangen, beispielsweise Steuerbefehle der Steuerungseinrichtung 12 sowie Nachrichten versenden, beispielsweise Meldungen, die die Kommunikationseinrichtung 14b an die Steuerungseinrichtung weiterleitet.

Für ihre Regelungsaufgaben haben die Reglermodule 25a, 25b separate Regler-Kommunikationsschnittstellen 27 zum Ausgeben von Stellwerten 28 und zum Empfangen von Istwerten 29. Die Kommunikationsschnittstellen 27 sind Echtzeitschnittstellen. Die Kommunikationsschnittstellen 27 enthalten digitale Bus-Schnittstellen 27a. Die Ventileinrichtungen 23 sind über Busleitungen 30a, 30b an die Kommunikationsschnittstellen 27 angeschlossen, so dass jeder zu regelnden fluidtechnischen Baugruppe bestehend aus je einer Ventileinrichtung 23 und einem der Aktoren 18c, 18d eine separate Regler-Busleitung 30a oder 30b zur Verfügung steht. Dadurch ist eine schnelle Kommunikation zwischen den zu regelnden Baugruppen und dem zugeordneten Reglermodul 25a, 25b möglich. Zwischen jedem Reglermodul 25a, 25b und seiner zu regelnden Anordnung 23, 18c oder 23, 18d existiert eine separate physikalische Verbindung. Auf diesen Verbindungen werden auch die Istwerte 29 übertragen.

Alternativ könnte das Reglermodul 25a ein Regler für zwei Aktoren sein und über die Busleitung 30a und eine optionale Busleitung 30c, die an Stelle der Busleitung 30b zum Reglermodul 25a führt, beide Anordnungen 23, 18c oder 23, 18d regeln.

Die Istwerte 29 enthalten z.B. Druck-Sensorwerte 33, die von Drucksensoren 31 einer Sensoranordnung 32 der Ventileinrichtungen 23 generiert werden. Die Drucksensoren 31 sind beispielsweise an Anschlüssen für Druckluftleitungen angeordnet, mit denen die Aktoren 18c, 18d an die Ventileinrichtungen 23 angeschlossen sind. Insofern bilden die Ventileinrichtungen 23 Sensorvorrichtungen. Die Ventileinrichtungen 23 übertragen die Druck-Sensorwerte 33 mittels eines Busankopplers 34, der insoweit eine Sensor-Kommunikationsschnittstelle bildet, auf der jeweiligen Busleitung 30a oder 30b an das Reglermodul 25a oder 25b.

An den Aktoren 18c, 18d angeordnete Sensorvorrichtungen 35c, 35d erzeugen weitere Sensorwerte als Istwerte 29, z.B. Druckwerte, Kraftwerte, Temperaturwerte und/oder Positionswerte 36.

Die Sensorvorrichtungen 35c, 35d sind seriell an die Ventileinrichtungen 23 über Busleitungen 37a, 37b angekoppelt. Hierfür könnten die Ventileinrichtungen 23 separate Busankoppler aufweisen. Es ist aber auch möglich, dass die Anschlusskontakte für die Busleitungen 37a, 37b bei den Ventileinrichtungen 23 zu den entsprechenden Anschlusskontakten der Busankoppler 34 durchgeschleift sind. Jedenfalls ist der Anschluss der Sensorvorrichtungen 35c, 35d sowie der Ventileinrichtungen 23 dadurch vereinfacht, dass diese Einrichtungen seriell miteinander gekoppelt sind, dass nur eine Verbindungsleitung zu den Regler-Kommunikationsschnittstellen 27 führt.

Die Einstellung von Parametern, insbesondere Regelungsparametern und/oder eine Auswahl einer Regelungsart (Lageregelung, Druckregelung, Lageregelung mit unterlagerter Druckregelung), und/oder eine Diagnose der Module der Ventilbatterie 11b, z.B. der Reglermodule 25a, 25b, können an zentraler Stelle mit einem Bediengerät 57, beispielsweise einem Notebook, realisiert werden. Das Bediengerät 57 ist an eine Bediengeräte-Schnittstelle 58 der Kommunikationseinrichtung 14b anschließbar und auf diesem Wege mit dem internen Kommunikationsbus 21 verbindbar. Dann können Parameter von dem Bediengerät 57 in die Ventilbatterie 11b, beispielsweise die Reglermodule 25a, 25b oder sonstige Module, geladen werden. Auch eine Diagnose ist mit dem Bediengerät 57 möglich. So senden beispielsweise die Reglermodule 25a, 25b Störungsmeldungen, Meldungen über eine Anzahl von bereits durchlaufenen Arbeitszyklen oder sonstige Diagnosedaten an das Bediengerät 57.

Es versteht sich, dass auch eine drahtlose Bedienung oder Diagnose möglich ist, beispielsweise mit einem Bediengerät 59, das drahtlos mit der Kommunikationseinrichtung 14b kommuniziert.

Die Inbetriebnahme des Automatisierungssystems 10 sowie die Diagnose und/oder Parametrierung der Reglermodule 25a, 25b, ist durch eine Auto-Identifikationskonzept vereinfacht. Die fluidtechnischen Geräte 17 oder diesen zugeordnete Einrichtungen, beispielsweise den Aktoren 18a-18c zugeordnete Sensorvorrichtungen 35a, 35b und 35c, enthalten oder bilden I-dentdaten-Sendeeinrichtungen 60, die Geräte-Identifikationsdaten 61a, 61b, 61c, 61d und 62 an Empfangseinrichtungen 63 für die Identifikationsdaten 61a - 61c, 62 der Ventilbatterien 11a, 11b. Die Identifikationsdaten 61a - 61d kennzeichnen die pneumatischen Aktoren 18a, 18b, 18c und 18d. Die Identifikationsdaten 62 kennzeichnen die Ventileinrichtungen 23.

Die Geräte-Identifikationsdaten 62 der Ventileinrichtungen 23 sind in einem optional vorhandenen Speicher 64 gespeichert. Bei der dem Aktor 18d zugeordneten Ventileinrichtung 23 können zusätzlich auch die Geräte-Identifikationsdaten 61d gespeichert sein, die den Aktor 18d kennzeichnen. Der Aktor 18d hat z.B. keinen eigenen Speicher zur Speicherung seiner Identifikationsdaten und ferner keine Schnittstelle, um diese an die Ventilbatterie 11b zu übermitteln.

Die den Aktor 18c fluidtechnisch ansteuernde Ventileinrichtung 23 übermittelt dessen Geräte-Identifikationsdaten 61c, die sie über die Leitung 37b empfängt, auf der Busleitung 30b weiter an die Regler-Kommunikationsschnittstelle 27.

Die Regler-Kommunikationsschnittstellen 27 bilden oder enthalten Empfangseinrichtungen 63 für die Geräte-Identifikationsdaten 62, 61c sowie Geräte-Identifikationsdaten 61d des Aktors 18d. Anhand dieser Geräte-Identifikationsdaten die beispielsweise Arbeitshübe der Aktoren 18c, 18d enthalten, regeln die Reglermodule 25a, 25b die Aktoren 18c, 18d. Dabei ist es möglich, dass die Reglermodule 25a, 25b unmittelbar die Geräte-Identifikationsdaten 61c, 61d und 62 zur Generierung von Regelungsparametern auswerten. Somit können beispielsweise Maximaldrücke dazu dienen, dass eine Druckregelung einen Maximaldruck der Druckluft begrenzt. Ferner ist es möglich, dass die Reglermodule 25a, 25b auf der vorhandenen Kommunikationsinfrastruktur, nämlich dem internen Kommunikationsbus 21 und der Kommunikationseinrichtung 14b, die jeweiligen Geräte-Identifikationsdaten 61b, 61d, 62 an das Bediengerät 57 übermitteln, das daraus Reglerparameter generiert und an die Reglermodule 25a, 25b auf dem genannten Kommunikationsweg sendet.

Die Sensorvorrichtung 35a überträgt die Geräte-Identifikationsdaten 61a drahtlos an eine in der Ventilbatterie-Kommunikationseinrichtung 14a enthaltene Empfangseinrichtung 63.

Der Aktor 18b ist mit einer konventionellen Druckluftleitung 86 und mit einer Fluid-Verbindungsleitung 87, die einen Fluidkanal 88 und Datenleitungen 89 aufweist, an die Ventilbatterie 11b angeschlossen. Die Datenleitungen 89 sind beispielsweise in einem den Fluidkanal 88 begrenzenden Mantel 90 angeordnet. Beim Stecken der Fluid-Verbindungsleitung 87 werden in der Zeichnung nicht dargestellte Kontakte der Ventilbatterie 11b und der Sensorvorrichtung 35b mit den Datenleitungen 89 verbunden, so dass gleichzeitig eine Fluidverbindung und eine Datenverbindung zwischen der Ventilbatterie 11b und der Sensorvorrichtung 35b sowie dem Aktor 18b hergestellt ist.

Die Sensorvorrichtung 35b überträgt die Geräte-Identifikationsdaten 61b drahtgebunden, z.B. über die Datenleitungen 89, an eine Empfangseinrichtung 63, die beispielsweise im den Aktor 18b steuernden Ventilmodul 16 enthalten ist.

Die Herstellung elektrischer Verbindungen bei der Ventilbatterie 11b ist einfach: an Gehäusen 38 der Reglermodule 25a, 25b sind seitlich Verkettungskontakte 39 vorgesehen, die beim Aneinanderstecken der Gehäuse 38 automatisch ineinander greifen und in Kontakt treten. Man erkennt dies bei einer Ventilbatterie 11c an einem Ein-/Ausgabemodul 40, dessen Gehäuse ein Gehäuseunterteil 41 aufweist, das baugleich mit Gehäuseunterteilen 41 der Gehäuse 38 ist. Beim Aufsetzen von Gehäuseoberteilen 42a, 42b auf die Gehäuseunterteile 41 treten in der Zeichnung nicht sichtbare Kontakte der Gehäuseoberteile 42a, 42b mit Leitungen des Kommunikationsbusses 21 sowie mit elektrischen Versorgungsleitungen 43a, 43b, 43c sowie weiteren, nicht einzeln beschriebenen Leitungen in Verbindung. Die Gehäuseoberteile 42, 42b sind beispielsweise mit Schrauben 46 an den Gehäuseunterteilen 41 befestigt.

Die Leitungen des Kommunikationsbusses 21 sowie der Versorgungsleitungen 43 erstrecken sich jeweils zwischen den an entgegengesetzten Seiten 44a, 44b der Gehäuse 38 angeordneten Verkettungskontakten 39. Somit sind die Reglermodule 25a, 25b mit einer Steck-Betätigungshandlung mit dem Kommunikationsbus 21 sowie mit den Versorgungsleitungen 43a - 43c zur elektrischen Stromversorgung verbunden. Die Verkettungskontakte 39 enthalten erste und zweite Versorgungskontakte 39a, 39b, die mit den Versorgungsleitungen 43a, 43b und 43c verbunden sind.

Jedes der Reglermodule 25a, 25b kann separat von anderen Modulen der Ventilbatterie 11b mit Versorgungsspannung versorgt werden. Beispielsweise können die Versorgungsspannung 45a dem Reglermodul 25a und die Versorgungsspannung 45b dem Reglermodul 25b zugeordnet werden, während weitere Module der Ventilbatterie 11b an weitere, in der Zeichnung nicht dargestellte Versorgungsleitungen angekoppelt sind.

Die Reglermodule 25a, 25b können wahlweise die Versorgungsspannung 45a oder 45b an ihren Regler-Kommunikationsschnittstellen 27 zur Versorgung externer Komponenten, beispielsweise der Ventileinrichtung 23 bereitstellen. Die Versorgungsspannungen 45a, 45b werden beispielsweise an elektrischen Kontakten 48, beispielsweise einem Kontaktstecker, der Ventilbatterie 11b eingespeist. Der Kontakt 48 ist an der Kommunikationseinrichtung 14b vorgesehen.

Zur Auswahl der Versorgungsspannung 45a oder 45b könnten beispielsweise elektrische Schalter 47 vorgesehen sein. Bevorzugt ist jedoch eine auf Software basierende Lösung, das heißt eine Parametrierung der Reglermodule zur Auswahl der Versorgungsspannung 45a oder 45b. Die Versorgungsspannungen 45a, 45b können gleiche oder unterschiedliche Versorgungsspannungen sein, beispielsweise gegenüber einem an der Versorgungsleitung 43c anliegenden Massepotential MP. Durch Abschalten der Versorgungsspannungen 45a oder 45b können Teile des Automatisierungssystemes 10, nämlich beispielsweise die Baugruppen 23, 18c oder 23, 18d zu- und abgeschaltet werden.

Mit den Reglermodulen 25a, 25b ist ein granulares, modulares Konzept verwirklicht, bei der ein jeweiliges Reglermodul zur Regelung einer kleinen Anzahl von Aktoren, vorzugsweise zwei Aktoren, wie beim Reglermodul 25a der Fall, oder auch nur einem einzigen Aktor, wie beim Reglermodul 25b. Dadurch ist die Verwaltung des Automatisierungssystems vereinfacht. Ferner kann das Automatisierungssystem 10 je nach Bedarf auf einfache Weise verkleinert oder erweitert werden, beispielsweise durch Anreihen weiterer erfindungsgemäßer Reglermodule an die Ventilbatterie 11b.

Jedes Reglermodul 25a, 25b ist zur Regelung eines einzigen Aktors 18c und 18d zuständig. Wenn optional das als Zweiachs-Reglermodul ausgestaltete Reglermodul 25a beide Aktoren 18c und 18d regelt, sind die Busleitung 30a beispielsweise an die mit "X" gekennzeichnete Regler-Kommunikationsschnittstelle 27 und zur Regelung des Aktors 18c die Busleitung 30c an die mit "Y" bezeichneten Kommunikationsschnittstelle 27 des Reglermoduls 25a angeschlossen.

Die Reglermodule 25a, 25b weisen zweckmäßigerweise Anzeigeeinrichtungen 49 auf, beispielsweise LEDs sowie vorteilhaft eine zumindest teilweise pixelbasierte oder segmentweise grafische Anzeige, beispielsweise ein LCD 51 oder eine Siebensegment-Anzeige. Die Anzeigeeinrichtungen 49 sind zweckmäßigerweise unter einer transparenten Schutzabdeckung 52 angeordnet und vor Umwelteinflüssen geschützt. Die Reglermodule 25a, 25b geben an den Anzeigeeinrichtungen 49 beispielsweise Betriebszustände oder Störungen aus. An dem LCD 51 oder der Siebensegment-Anzeige wird beispielsweise angezeigt, welches Fahrprogramm oder Reglerprogramm das jeweilige Reglermodul 25a, 25b aktuell fährt. Ein solches Fahrprogramm enthält beispielsweise eine durch den jeweiligen Aktor 18c oder 18d anzufahrende Position, eine maximal einzustellende Kraft, Fahrgeschwindigkeiten, Bremsgeschwindigkeiten oder dergleichen.

Die Reglermodule 25a, 25b enthalten vorzugsweise mehrere Regler, nämlich eine Lageregelung 53 und eine Druckregelung 54. Die Lageregelung 53 oder die Druckregelung 54 geben die Stellwerte 28 an ein Ventil 56 der Ventileinrichtung aus. Die Lageregelung 53 umfasst vorteilhaft eine unterlagerte Druckregelung 55.

## Patentansprüche

1. Fluidtechnische, insbesondere pneumatische, Ventilbatterie mit mehreren in einer Reihenrichtung nebeneinander angeordneten Ventilmodulen (16) zur fluidtechnischen Ansteuerung fluidtechnischer Aktoren (18c, 18d), mit einer an die Ventilmodule (16) angereihten Ventilbatterie-Kommunikationseinrichtung (14a, 14b) zu einer externen Kommunikation der Ventilbatterie (11a, 11b; 11c) und mit einem internen Kommunikationsbus (21), **dadurch gekennzeichnet, dass** sie mindestens ein Reglermodul zur Regelung eines Aktors (18c, 18d), insbesondere eines pneumatischen Antriebs, aufweist, dass das mindestens eine Reglermodul (25a, 25b) eine Regler-Kommunikationsschnittstelle (27) zur Regler-Stellwert-Ausgabe und zum Istwert-Empfang aufweist, dass das mindestens eine Reglermodul (25a, 25b) Verkettungskontakte (39) zur Anreihung an eine benachbarte Komponente der Ventilbatterie (11a, 11b; 11c) aufweist, dass das mindestens eine Reglermodul (25a, 25b) eine Internbus-Schnittstelle (26) zum Anschluss an den internen Kommunikationsbus (21) der Ventilbatterie (11a, 11b; 11c) aufweist, dass das mindestens eine Reglermodul (25a, 25b) über den internen Kommunikationsbus (21) mit der Ventilbatterie-Kommunikationseinrichtung (14a, 14b) zu einer externen Kommunikation der Ventilbatterie (11a, 11b; 11c) verbindbar ist, und dass die Regler-Kommunikationsschnittstelle (27) zur schnellen Stellwert-Ausgabe und zum schnellen Istwert-Empfang separat von der Internbus-Schnittstelle (26) ist.

2. Ventilbatterie nach Anspruch 1, **dadurch gekennzeichnet, dass** das mindestens eine Reglermodul (25a, 25b) über die Ventilbatterie-Kommunikationseinrichtung (14a, 14b) steuerbar und/oder parametrierbar ist und/oder Diagnosedaten ausgeben kann.

3. Ventilbatterie nach Anspruch 1 oder 2, **dadurch gekennzeichnet, dass** die Regler-Kommunikationsschnittstelle (27) eine Echtzeit-Schnittstelle ist.

4. Ventilbatterie nach einem der vorhergehenden Ansprüche, **dadurch gekennzeichnet, dass** die Regler-Kommunikationsschnittstelle (27) eine Bus-Schnittstelle (27a), insbesondere eine Feldbus-Schnittstelle, aufweist.

5. Ventilbatterie nach einem der vorhergehenden Ansprüche, **dadurch gekennzeichnet, dass** die Regler-Kommunikationsschnittstelle (27) und/oder die Internbus-Schnittstelle (26) drahtlos ist.

6. Ventilbatterie nach einem der vorhergehenden Ansprüche, **dadurch gekennzeichnet, dass** das mindestens eine Reglermodul (25a, 25b) eine Empfangseinrichtung (63) zum Empfang von Geräte-Identifikationsdaten (61a-61d; 62) des zu regelnden Aktors (18c, 18d) und/oder einer den Aktor (18c, 18d) ansteuernden Ansteuereinrichtung aufweist.

7. Ventilbatterie nach einem der vorhergehenden Ansprüche, **dadurch gekennzeichnet, dass** das mindestens eine Reglermodul (25a, 25b) zur Regelung eines einzigen Aktors (18c,18d) ausgestaltet ist.

8. Ventilbatterie nach einem der Ansprüche 1 bis 6, **dadurch gekennzeichnet, dass** das mindestens eine Reglermodul (25a, 25b) zur Regelung zweier mechanisch miteinander verketteter Aktoren (18c, 18d) ausgestaltet ist.

9. Ventilbatterie nach einem der vorhergehenden Ansprüche, **dadurch gekennzeichnet, dass** das mindestens eine Reglermodul (25a, 25b) eine Lageregelung (53) und/oder eine Kraftregelung und/oder eine Druckregelung (54) enthält.

10. Ventilbatterie nach einem der vorhergehenden Ansprüche, **dadurch gekennzeichnet, dass** die Verkettungskontakte (39) erste Versorgungskontakte (39a) zum Anschluss an eine erste Versorgungsspannung (45a, 45b) der Ventilbatterie (11a, 11b; 11c) umfassen, und dass das mindestens eine Reglermodul (25a, 25b) den zu regelnden Aktor (18c, 18d) oder eine den Aktor (18c, 18d) ansteuernde Ansteuereinrichtung mit der ersten Versorgungsspannung (45a, 45b) versorgt.

11. Ventilbatterie nach Anspruch 10, **dadurch gekennzeichnet, dass** die Verkettungskontakte (39) zweite Versorgungskontakte (39b) zumAnschluss an eine zweite Versorgungsspannung (45a, 45b) der Ventilbatterie (11a, 11b; 11c) umfassen, und dass das mindestens eine Reglermodul (25a, 25b) den Aktor (18c, 18d) oder die den Aktor (18c, 18d) ansteuernde Ansteuereinrichtung wahlweise mit der ersten oder zweiten Versorgungsspannung (45a, 45b) versorgt.

12. Ventilbatterie nach Anspruch 11, **dadurch gekennzeichnet, dass** die jeweils zu verwendende erste oder zweite Versorgungsspannung (45a, 45b) parametrierbar und/oder mit einem elektrischen Schalter (47) des mindestens einen Reglermoduls (25a, 25b) wählbar ist.

13. System mit einer Ventilbatterie nach einem der vorhergehenden Ansprüche, mit dem Aktor (18c, 18d) und mit einer Ventileinrichtung (23), **dadurch gekennzeichnet, dass** das mindestens eine Reglermodul (25a, 25b) zur Regelung des Aktors (18c, 18d) zur Ansteuerung der Ventileinrichtung (23) ausgestaltet ist, wobei der von dem mindestens einen Reglermodul (25a, 25b) geregelte Aktor (18c, 18d) ein fluidtechnischer, insbesondere pneumatischer, Aktor (18c, 18d) ist.

14. System nach Anspruch 13, **dadurch gekennzeichnet, dass** die Ventileinrichtung (23) von der Ventilbatterie (11a, 11b; 11c) separat ist.

15. System nach Anspruch 13 oder 14, **dadurch gekennzeichnet, dass** die Regler-Kommunikationsschnittstelle (27) zur seriellen Ankopplung der die Ventileinrichtung (23) und des Aktors (18c, 18d) und/oder einer Sensoranordnung (32) ausgestaltet ist.

## Claims

1. Fluid power, in particular pneumatic, valve bank, comprising a plurality of valve modules (16) arranged adjacent to one another in the direction of a row for the fluid power-controlled selection of fluid power actuators (18c, 18d), further comprising a valve bank communication device (14a, 14b) adjacent to the valve modules (16) for an external communication of the valve bank (11 a, 11b; 11c), and further comprising an internal communication bus (21), **characterised in that** it comprises at least one controller module for the closed-loop control of an actuator (18c, 18d), in particular a pneumatic drive, **in that** the at least one controller module (25a, 25b) comprises a controller communication interface (27) for set value output and actual value reception, **in that** the at least one controller module (25a, 25b) comprises interconnection contacts (39) for fitting to an adjacent component of the valve bank (11 a, 11 b; 11c), **in that** the at least one controller module (25a, 25b) comprises an internal bus interface (26) for connection to the internal communication bus (21) of the valve bank (11a, 11b; 11c), **in that** the at least one controller module (25a, 25b) can be connected via the internal communication bus (21) to the valve bank communication device (14a, 14b) for an external communication of the valve bank (11 a, 11 b; 11 c), and **in that** the controller communication interface (27) is separate from the internal bus interface (26) for fast set value output and for fast actual value reception.

2. Valve bank according to claim 1, **characterised in that** the at least one controller module (25a, 25b) can be controlled and/or parameterised and/or can output diagnostic data via the valve bank communication device (14a, 14b).

3. Valve bank according to claim 1 or 2, **characterised in that** the controller communication interface (27) is a real-time interface.

4. Valve bank according to any of the preceding claims, **characterised in that** the controller communication interface (27) comprises a bus interface (27a), in particular a field bus interface.

5. Valve bank according to any of the preceding claims, **characterised in that** the controller communication interface (27) and/or the internal bus interface (26) is/are wireless.

6. Valve bank according to any of the preceding claims, **characterised in that** the at least one controller module (25a, 25b) comprises a receiving device (63) for receiving device identification data (61a-61d; 62) of the actuator (18c, 18d) to be controlled and/or of a driver device selecting the actuator (18c, 18d).

7. Valve bank according to any of the preceding claims, **characterised in that** the at least one controller module (25a, 25b) is designed for the closed-loop control of a single actuator (18c, 18d).

8. Valve bank according to any of claims 1 to 6, **characterised in that** the at least one controller module (25a, 25b) is designed for the closed-loop control of two mechanically interlinked actuators (18c, 18d).

9. Valve bank according to any of the preceding claims, **characterised in that** the at least one controller module (25a, 25b) includes a position control (53) and/or a force control and/or a pressure control (54).

10. Valve bank according to any of the preceding claims, **characterised in that** the interconnection contacts (39) comprise first supply contacts (39a) for connection to a first supply voltage (45a, 45b) of the valve bank (11 a, 11 b; 11c), and **in that** the at least one controller module (25a, 25b) supplies the actuator (18c, 18d) to be controlled or a driver device selecting the actuator (18c, 18d) with the first supply voltage (45a, 45b).

11. Valve bank according to claim 10, **characterised in that** the interconnection contacts (39) comprise second supply contacts (39b) for connection to a second supply voltage (45a, 45b) of the valve bank (11 a, 11 b; 11c), and **in that** the at least one controller module (25a, 25b) supplies the actuator (18c, 18d) or a driver device selecting the actuator (18c, 18d) optionally with the first or the second supply voltage (45a, 45b).

12. Valve bank according to claim 11, **characterised in that** the first or the second supply voltage (45a, 45b) to be used can be parameterised and/or selected with an electric switch (47) of the at least one controller module (25a, 25b).

13. System with a valve bank according to any of the preceding claims, with the actuator (18c, 18d) and with a valve device (23), **characterised in that** the at least one controller module (25a, 25b) for the open-loop control of the actuator (18c, 18d) is designed for the selection of the valve device (23), the actuator (18c, 18d) controlled in a closed loop by the at least one controller module (25a, 25b) being a fluid power, in particular pneumatic, actuator (18c, 18d).

14. System according to claim 13, **characterised in that** the valve device (23) is separate from the valve bank (11 a, 11 b; 11 c).

15. System according to claim 13 or 14, **characterised in that** the controller communication interface (27) is designed for the serial coupling of the valve device (23) and the actuator (18c, 18d) and/or a sensor arrangement (32).

## Revendications

1. Batterie de valves fluidique, en particulier pneumatique avec plusieurs modules de valve (16) disposés les uns à côté des autres en série pour la commande fluidique d'actionneurs fluidiques (18c, 18d), avec un dispositif de communication de batterie de valves (14a, 14b) raccordé aux modules de valve (16) pour une communication externe de la batterie de valves (11a, 11b ; 11c) et avec un bus de communication interne (21), **caractérisée en ce qu'**elle présente au moins un module de régulation pour la régulation d'un actionneur (18c, 18d), en particulier d'un entraînement pneumatique, **en ce qu'**au moins un module de régulation (25a, 25b) présente une interface de communication de régulateur (27) pour l'émission de valeur de réglage du régulateur et pour la réception de valeur réelle, **en ce qu'**au moins un module de régulation (25a, 25b) présente des contacts d'interconnexion (39) pour le raccordement à un composant contigu de la batterie de valves (11 a, 11 b ; 11 c), **en ce qu'**au moins un module de régulation (25a, 25b) présente une interface de bus interne (26) pour le raccordement au bus de communication interne (21) de la batterie de valves (11a, 11b ; 11c), **en ce qu'**au moins un module de régulation (25a, 25b) peut être relié par le bus de communication interne (21) au dispositif de communication de batterie de valves (14a, 14b) pour une communication externe de la batterie de valves (11a, 11 b ; 11 c), et **en ce que** l'interface de communication de régulateur (27) est séparée de l'interface de bus interne (26) pour l'émission de valeur de réglage et la réception de valeur réelle rapides.

2. Batterie de valves selon la revendication 1, **caractérisée en ce qu'**au moins un module de régulation (25a, 25b) peut être commandé et/ou paramétré par le dispositif de communication de batterie de valves (14a, 14b) et/ou peut émettre des données diagnostiques.

3. Batterie de valves selon la revendication 1 ou 2, **caractérisée en ce que** l'interface de communication de régulateur (27) est une interface en temps réel.

4. Batterie de valves selon l'une quelconque des revendications précédentes, **caractérisée en ce que** l'interface de communication de régulateur (27) présente une interface de bus (27a), en particulier une interface de bus de champ.

5. Batterie de valves selon l'une quelconque des revendications précédentes, **caractérisée en ce que** l'interface de communication de régulateur (27) et/ou l'interface de bus interne (26) est sans fil.

6. Batterie de valves selon l'une quelconque des revendications précédentes, **caractérisée en ce qu'**au moins un module de régulation (25a, 25b) présente un dispositif de réception (63) pour la réception de données d'identification d'appareils (61a-61d ; 62) de l'actionneur (18c, 18d) à réguler et/ou d'un dispositif de commande commandant l'actionneur (18c, 18d).

7. Batterie de valves selon l'une quelconque des revendications précédentes, **caractérisée en ce qu'**au moins un module de régulation (25a, 25b) est configuré pour la régulation d'un seul actionneur (18c, 18d).

8. Batterie de valves selon l'une quelconque des revendications 1 à 6, **caractérisée en ce qu'**au moins un module de régulation (25a, 25b) est configuré pour la régulation de deux actionneurs (18c, 18d) interconnectés l'un à l'autre mécaniquement.

9. Batterie de valves selon l'une quelconque des revendications précédentes, **caractérisée en ce qu'**au moins un module de régulation (25a, 25b) contient une régulation de position (53) et/ou une régulation de force et/ou une régulation de pression (54).

10. Batterie de valves selon l'une quelconque des revendications précédentes, **caractérisée en ce que** les contacts d'interconnexion (39) comportent des premiers contacts d'alimentation (39a) pour le raccordement à une première tension d'alimentation (45a, 45b) de la batterie de valves (11a, 11b ; 11c), et **en ce qu'**au moins un module de régulation (25a, 25b) alimente l'actionneur à réguler (18c, 18d) ou un dispositif de commande commandant l'actionneur (18c, 18d) avec la première tension d'alimentation (45a, 45b).

11. Batterie de valves selon la revendication 10, **caractérisée en ce que** les contacts d'interconnexion (39) comportent des deuxièmes contacts d'alimentation (39b) pour le raccordement à une seconde tension d'alimentation (45a, 45b) de la batterie de valves (11a, 11b ; 11c) et **en ce qu'**au moins un module de régulation (25a, 25b) alimente l'actionneur (18c, 18d) ou le dispositif de commande commandant l'actionneur (18c, 18d) au choix avec la première ou seconde tension d'alimentation (45a, 45b).

12. Batterie de valves selon la revendication 11, **caractérisée en ce que** la première ou seconde tension d'alimentation à utiliser respectivement (45a, 45b) peut être paramétrée et/ou choisie avec un commutateur électrique (47) d'au moins un module de régulation (25a, 25b).

13. Système présentant une batterie de valves selon l'une quelconque des revendications précédentes, l'actionneur (18c, 18d) et un dispositif à valves (23), **caractérisé en ce qu'**au moins un module de régulation (25a, 25b) pour la régulation de l'actionneur (18c, 18d) est configuré pour la commande du dispositif à valves (23), sachant que l'actionneur (18c, 18d) régulé par au moins un module de régulation (25a, 25b) est un actionneur (18c, 18d) fluidique, en particulier pneumatique.

14. Système selon la revendication 13, **caractérisé en ce que** le dispositif à valves (23) est séparé de la batterie de valves (11a, 11b ; 11c).

15. Système selon la revendication 13 ou 14, **caractérisée en ce que** l'interface de communication de régulateur (27) est configuré pour le couplage en série du dispositif à valves (23) et de l'actionneur (18c, 18d) et/ou d'un ensemble de détection (32).
